# EUROPEAN PATENT SPECIFICATION

(11) **EP 3 780 058 B1**
(45) Date of publication and mention of the grant of the patent: **13.09.2023**
(21) Application number: 19819169.4
(22) Date of filing: 14.05.2019
(51) Int. Cl.: H01H 36/00, A44B 11/25, B60R 22/48

(54) **BUCKLE SWITCH AND BUCKLE**
GURTSCHLOSSSCHALTER UND GURTSCHLOSS
COMMUTATEUR DE BOUCLE ET BOUCLE

(30) Priority: 14.06.2018 JP 2018113700
(43) Date of publication of application: 17.02.2021
(73) Proprietor: Joyson Safety Systems Japan G.K., Echi-gun, Shiga 529-1388 (JP)
(72) Inventor: NAKAGAWA, Tomofumi, Echi-gun, Shiga 529-1388 (JP)
(74) Representative: Banzer, Hans-Jörg
(86) International application number: PCT/JP2019/019062
(87) International publication number: WO 2019/239766

(56) References cited:
- JP-A- 2004 319 289
- JP-A- 2004 319 289
- JP-A- 2005 212 682
- JP-A- 2005 212 682
- JP-A- 2007 035 397
- JP-A- 2007 035 397
- JP-A- 2011 098 667
- JP-A- 2015 201 343
- JP-A- 2015 201 343
- US-A1- 2018 078 001

## Description

### TECHNICAL FIELD

The present invention relates to a buckle switch and to a buckle of a seat belt device provided in a moving body which is an automobile or the like.

### BACKGROUND ART

A seat belt device provided in an automobile or the like latches a tongue, on which webbing for restraining an occupant is hung, to a buckle. The buckle is provided with a buckle switch for detecting that the tongue is inserted and latched. As the buckle switch, a buckle switch including a magnetic sensor that detects a latch in response to magnetic flux of a magnet moving accompanying tongue insertion is provided (Patent Literature 1).

Patent Literature 1: JP-A-2003-189912; Patent Literature 2: JP2015201343A

In the above-described Patent Literature 1, the magnetic sensor is provided on a substrate, and the substrate including the magnetic sensor is attached to a buckle switch housing, and the buckle switch housing is attached to a base of a tongue.

Patent Literature 2 discloses a magnetic buckle switch.

In the buckle having this configuration, a bulk (a volume) of the buckle switch housing is increased by an amount of the substrate. Therefore, a volume of the buckle including the buckle switch housing is also large.

### SUMMARY OF INVENTION

An object of the present invention is to provide a buckle switch having a small volume and a buckle including the buckle switch.

According to the present invention, the buckle switch includes all the technical features of claim 1.

According to still another aspect of the present invention, a first harness is electrically connected to one of the terminals via a resistor, a second harness is electrically connected to the rest of the terminals, and the first and second harnesses extend from the mold.

According to still another aspect of the present invention, a buckle includes a buckle switch configured to detect latching of a tongue plate and a magnet movable close to the buckle switch as the tongue plate is inserted, in which the buckle switch is one according to the present invention.

According to still another aspect of the present invention, the buckle further includes an ejector movable as the tongue plate is inserted, and the magnet is provided in the ejector.

According to still another aspect of the present invention, the buckle further includes a base configured to hold the ejector movably in a tongue plate insertion and removal direction, an opening provided in the base, and a latching plate engageable with the tongue plate through the opening. The buckle switch is attached to the base. A part of the buckle switch protrudes toward the opening, and the magnetic sensor is provided at the protruding part.

In the buckle switch according to the present invention, since a substrate is omitted and the magnetic sensor is directly held on the synthetic resin mold, it is possible to reduce a volume of the buckle switch.

Using the buckle switch having a small volume, it is possible to reduce a volume of the buckle.

### BRIEF DESCRIPTION OF DRAWINGS

Fig. 1 is a cross-sectional view of a buckle according to an embodiment.
Fig. 2 is a perspective view of a buckle switch according to the embodiment.
Fig. 3 is an exploded perspective view of the buckle switch according to the embodiment.
Fig. 4 is an exploded perspective view of the buckle switch according to the embodiment.
Fig. 5 is a circuit diagram of the buckle switch.

### DESCRIPTION OF EMBODIMENTS

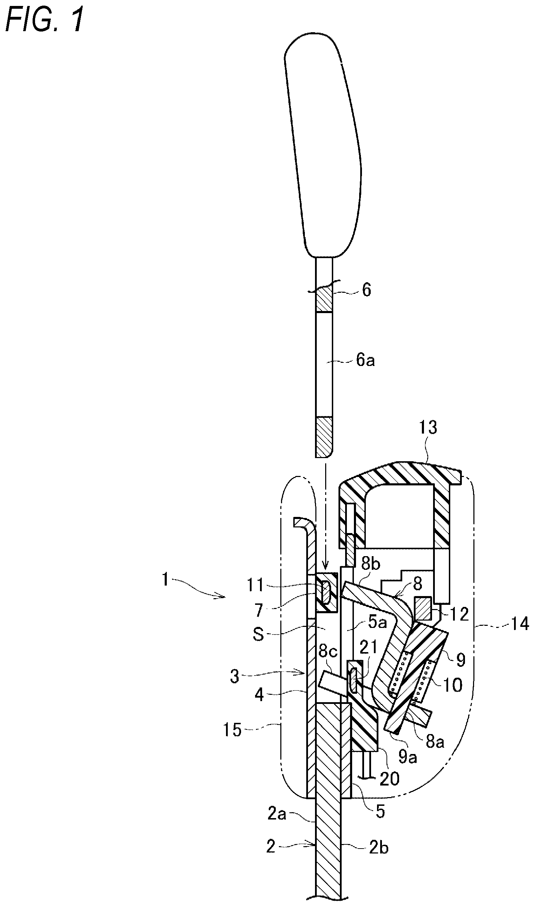

Hereinafter, embodiments will be described with reference to Figs. 1 to 5.

Fig. 1 shows a buckle of a seat belt device of an automobile and a tongue mounted on the buckle according to an embodiment. Webbing (not shown) is hung on the tongue.

The buckle 1 includes a base 3 fixed to an upper end portion of an anchor plate 2 by a fixing member which is a rivet (not shown) or the like. A lower end portion of the anchor plate 2 is connected to a vehicle body member (not shown).

The base 3 includes a first base plate 4 and a second base plate 5. The first base plate 4 is fixed to one surface 2a of the upper end portion of the anchor plate 2, and the second base plate 5 is fixed to the other surface 2b of the upper end portion of the anchor plate 2.

The first base plate 4 and the second base plate 5 extend upward from an upper part of the anchor plate 2, and a space between the first base plate 4 and the second base plate 5 is an insertion space S for inserting a tongue plate 6.

An ejector 7 is provided in the insertion space S and is movable upward and downward. Openings (not shown) are formed at both end portions of the ejector 7, and a guide rod (not shown) provided along both sides of the base 3 is inserted into the openings, so that the ejector 7 is guided by the guide rod so as to be movable in an upper-lower direction between the base plates 4, 5. An eject spring (not shown) formed of a coil spring is wound around the guide rod, and the ejector 7 is biased upward by the eject spring. A magnet 11 is provided in the ejector 7.

A latching plate 8 is rotatably held by the base 3. The latching plate 8 is bent into a substantially crank shape.

A holder 9 is held by the latching plate 8, and a rod portion 9a of the holder 9 is inserted into an insertion hole 8a of the latching plate 8. The holder 9 is biased upward by a coil spring 10 wound around the rod portion 9a, and an upper end portion of the holder 9 is in contact with a hold bar 12. Both end portions of the hold bar 12 are supported on the base 3.

A press button 13 is attached to an upper end portion of the base 3 and is movable upward and downward. The press button 13 is biased upward by a return spring (not shown) formed of a coil spring provided along both side portions of the base 3.

The second base plate 5 is formed with an opening 5a into which a front end portion 8b of the latching plate 8 and a rear extending portion 8c are inserted. In the latching plate 8, the front end portion 8b can enter and retract from the space S through the opening 5a. The extending portion 8c constantly extends into the space S through the opening 5a.

A buckle switch 20 protrudes upward from a lower edge of the opening 5a. A lower part of the buckle switch 20 is superposed on and fixed to the second base plate 5. An upper part of the buckle switch 20 protrudes upward from the lower edge of the opening 5a, and a sensor chip 21 is provided in the upper part of the buckle switch 20.

A side surface portion of the buckle 1 is surrounded by covers 14, 15.

When the tongue plate 6 is inserted into the space S from above, the ejector 7 is pushed and moved downward, and the ejector 7 pushes the extending portion 8c downward in Fig. 1.

Accordingly, the latching plate 8 rotates in a counterclockwise direction in Fig. 1, and the front end portion 8b of the latching plate 8 enters the space S. The front end portion 8b enters the opening 6a of the tongue plate 6 that has entered the space S. Accordingly, the tongue plate 6 is latched. When the latching plate 8 rotates in the counterclockwise direction, the holder 9 enters between the hold bar 12 and the latching plate 8 by a biasing force of the coil spring 10, and a latched state of the tongue plate 6 is maintained.

In this latched state, the magnet 11 of the ejector 7 faces the sensor chip 21 of the buckle switch 20. Magnetic flux of the magnet 11 is sensed by a magnetic sensor of the sensor chip 21, and the buckle switch 20 outputs a latch detection signal.

When the press button 13 is pressed, the press button 13 presses the holder 9 downward from the hold bar 12. Accordingly, the latching plate 8 is rotated in a clockwise direction by a biasing force of the coil spring 10, and the front end portion 8b exits from the opening 6a of the tongue plate 6. As a result, the ejector 7 moves upward by a biasing force of an ejector spring, and the tongue plate 6 is pushed out of the buckle 1.

A latch mechanism of the buckle 1 is an example, and a latch mechanism other than the above may be used.

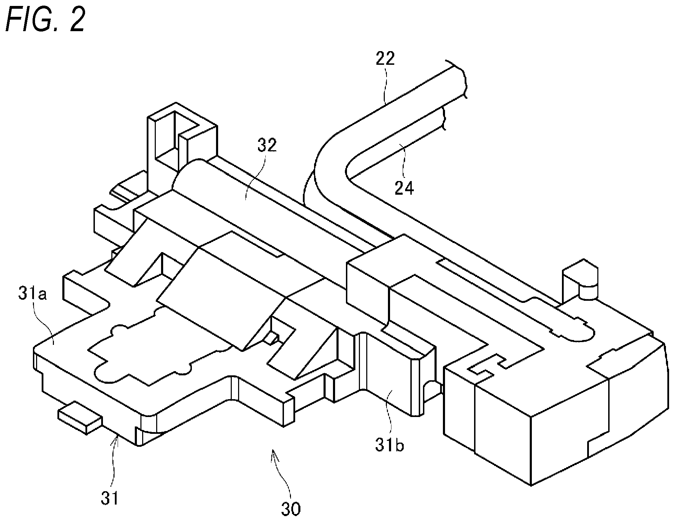

Next, a structure of the buckle switch 20 will be described with reference to Figs. 2 to 5.

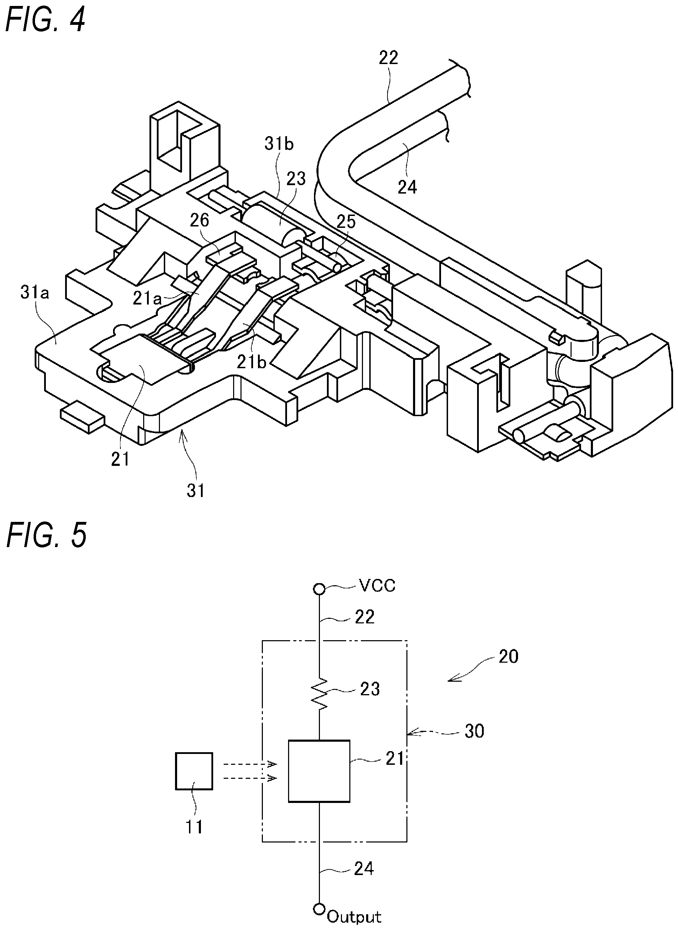

As shown in Fig. 5, the buckle switch 20 includes an input resistor 23 and the sensor chip 21 including a magnetic sensor that are arranged in series between a power supply VCC and an output terminal Output via harnesses 22, 24. The sensor chip 21 includes a magnetic sensor whose output state changes in response to the magnetic flux of the magnet 11, an amplifier, a switching transistor, a noise removal bypass filter, and the like.

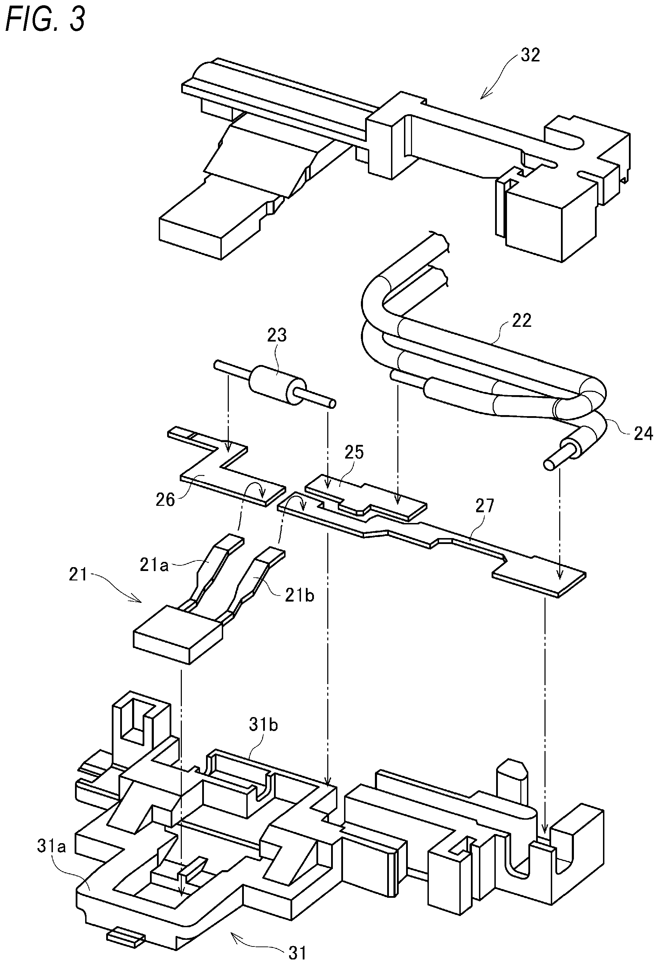

The sensor chip 21 and the resistor 23 are covered with a synthetic resin mold 30. As shown in Figs. 3 and 4, the synthetic resin mold 30 includes a base mold 31 and a top mold 32.

The base mold 31 includes an extending portion 31a that protrudes toward the opening 5a of the second base plate 5 and a body portion 31b that overlaps the second base plate 5. The sensor chip 21 is provided in the extending portion 31a, and a pair of terminals 21a, 21b that extend from the sensor chip 21 extend to above the body portion 31b. Three lead ribbons 25, 26, 27 are provided on the body portion 31b, and one end of the resistor 23 is fixed to the lead ribbon 25 by soldering or the like, and the other end of the resistor 23 is fixed to the lead ribbon 26. The terminal 21a of the sensor chip 21 is fixed to the lead ribbon 26, and the terminal 21b is fixed to the lead ribbon 27. The harness 22 is fixed to the lead ribbon 25, and the harness 24 is fixed to the lead ribbon 27.

The top mold 32 is formed by insert molding so as to cover the sensor chip 21, the lead ribbons 25 to 27, and the resistor 23 that are provided on the base mold 31, and to cover front end portions of the harnesses 22, 24. Accordingly, the buckle switch 20 is formed as shown in Fig. 2.

The buckle switch 20 has a small volume since the sensor chip 21 is provided directly on the base mold 31 and no substrate is used. Therefore, the volume of the buckle 1 is reduced.

The above-described embodiment is an example of the present invention, and the present invention is not limited to the above-described embodiment.

Although the present invention has been described in detail using specific embodiments, it will be apparent to those skilled in the art that various changes can be made without departing from the spirit and the scope of the present invention.

This application is based on Japanese Patent Application No. 2018-113700, filed on June 14, 2018, entirety of which is incorporated by reference.

### REFERENCE SIGNS LIST

- 1: buckle
- 2: anchor plate
- 3: base
- 4: first base plate
- 5: second base plate
- 5a: opening
- 6: tongue plate
- 7: ejector
- 8: latching plate
- 9: holder
- 11: magnet
- 12: hold bar
- 14, 15: cover
- 20: buckle switch
- 21: sensor chip
- 21a, 21b: terminal
- 25, 26, 27: lead ribbon
- 30: synthetic resin mold
- 31: base mold
- 32: top mold

## Claims

1. A buckle switch (20) including a magnetic sensor and a mold (30) made of synthetic resin that surrounds the magnetic sensor,
wherein the mold (30) includes a base mold (31) that holds the magnetic sensor and a top mold (32) that is integrated with the base mold (31),
**characterized in that**
the magnetic sensor is provided in a sensor chip (21), and a pair of terminals (21a, 21b) extends from the sensor chip (21)
and **in that** the base mold (31) is directly contacted with the sensor chip (21).

2. The buckle switch according to claim 1,
wherein a first harness (22) is electrically connected to one of the pair of terminals (21a, 21b) via a resistor (23), a second harness (24) is electrically connected to another one of the pair of terminals (21a, 21b), and the first and second harnesses (22, 24) extend from the mold.

3. A buckle (1) including a buckle switch (20) configured to detect latching of a tongue plate (6) and a magnet (11) movable close to the buckle switch (20) as the tongue plate (6) is inserted,
wherein the buckle switch (20) is the buckle switch according to any one of claims 1 to 2.

4. The buckle (1) according to claim 3, further comprising
an ejector (7) movable as the tongue plate (6) is inserted,
wherein the magnet (11) is provided in the ejector (7).

5. The buckle (1) according to claim 4, further comprising:
a base (3) configured to hold the ejector (7) movably in a tongue plate insertion and removal direction;
an opening (5a) provided in the base (3); and
a latching plate (8) engageable with the tongue plate (6) through the opening (5a),
wherein the buckle switch (20) is attached to the base (3), and
wherein a part of the buckle switch (20) protrudes toward the opening (5a), and the magnetic sensor is provided at the protruding part.

## Patentansprüche

1. Schnallenschalter (20), der einen Magnetsensor und eine Form (30) aus Kunstharz, die den Magnetsensor umgibt, aufweist,
wobei die Form (30) eine Basisform (31), die den Magnetsensor hält, und eine Oberform (32), die mit der Basisform (31) integriert ist, aufweist,
**dadurch gekennzeichnet, dass**
der Magnetsensor in einem Sensorchip (21) vorhanden ist, und sich ein Paar von Anschlüssen (21a, 21b) von dem Sensorchip (21) erstrecken,
und dass die Basisform (31) direkt mit dem Sensorchip (21) in Kontakt steht.

2. Schnallenschalter nach Anspruch 1,
wobei ein erster Kabelbaum (22) über einen Widerstand (23) mit einem der beiden Anschlüsse (21a, 21b) elektrisch verbunden ist, wobei ein zweiter Kabelbaum (24) mit dem anderen der beiden Anschlüsse (21a, 21b) elektrisch verbunden ist, und wobei sich der erste und der zweite Kabelbaum (22, 24) von der Form aus erstrecken.

3. Schnalle (1), die einen Schnallenschalter (20), der ausgestaltet ist, um ein Einrasten einer Zungenplatte (6) zu erfassen, und einen Magneten (11), der in der Nähe des Schnallenschalters (20) beweglich ist, wenn die Zungenplatte (6) eingeführt wird, aufweist,
wobei der Schnallenschalter (20) der Schnallenschalter nach einem der Ansprüche 1 bis 2 ist.

4. Schnalle (1) nach Anspruch 3, die darüber hinaus einen Auswerfer (7) umfasst, der beweglich ist, wenn die Zungenplatte (6) eingeführt wird, wobei der Magnet (11) in dem Auswerfer (7) vorhanden ist.

5. Schnalle (1) nach Anspruch 4, die darüber hinaus umfasst:
eine Basis (3), die ausgestaltet ist, um den Auswerfer (7) in einer Richtung zum Einsetzen und Entfernen der Zungenplatte beweglich zu halten;
eine Öffnung (5a), die in der Basis (3) vorhanden ist; und
eine Verriegelungsplatte (8), die durch die Öffnung (5a) mit der Zungenplatte (6) in Eingriff bringbar ist,
wobei der Schnallenschalter (20) an der Basis (3) angebracht ist, und
wobei ein Teil des Schnallenschalters (20) in Richtung der Öffnung (5a) vorsteht und der Magnetsensor an dem vorstehenden Teil vorhanden ist.

## Revendications

1. Un interrupteur de boucle (20) comprenant un capteur magnétique et un moule (30) en résine synthétique qui entoure le capteur magnétique,
dans lequel le moule (30) comprend un moule de base (31) qui contient le capteur magnétique et un moule supérieur (32) qui est intégré au moule de base (31), **caractérisé en ce que** le capteur magnétique est prévu dans une puce de capteur (21 ), et une paire de bornes (21a, 21b) s'étend depuis la puce de capteur (21) et **en ce que** le moule de base (31) est directement en contact avec la puce de capteur (21).

2. Interrupteur de boucle selon la revendication 1,
dans lequel un premier faisceau (22) est connecté électriquement à l'une de la paire de bornes (21a, 21b) via une résistance (23), un deuxième faisceau (24) est connecté électriquement à une autre de la paire de bornes (21a, 21b ), et les premier et deuxième faisceaux (22, 24) s'étendent depuis le moule.

3. Une boucle (1) comprenant un interrupteur de boucle (20) configuré pour détecter le verrouillage d'une languette (6) et un aimant (11) mobile à proximité de l'interrupteur de boucle (20) lorsque la languette (6) est insérée, dans lequel l'interrupteur de boucle (20) est l'interrupteur de boucle selon l'une quelconque des revendications 1 à 2.

4. Boucle (1) selon la revendication 3, comprenant en outre un éjecteur (7) mobile lorsque la languette (6) est insérée, dans lequel l'aimant (11) est prévu dans l'éjecteur (7).

5. Boucle (1) selon la revendication 4, comprenant en outre :
une base (3) configurée pour maintenir l'éjecteur (7) de manière mobile dans une direction d'insertion et de retrait de languette ;
une ouverture (5a) ménagée dans la base (3) ; et
une plaque de verrouillage (8) pouvant venir en prise avec la languette (6) à travers l'ouverture (5a), dans lequel l'interrupteur de boucle (20) est fixé à la base (3), et dans lequel une partie de l'interrupteur de boucle (20) fait saillie vers l'ouverture (5a), et le capteur magnétique est prévu au niveau de la partie qui fait saillie.
